(19) Europäisches Patentamt

European Patent Office

Office européen des brevets

(11) **EP 2 697 913 B1**

(12) **EUROPEAN PATENT SPECIFICATION**

(45) Date of publication and mention of the grant of the patent:
**12.10.2016 Bulletin 2016/41**

(21) Application number: **11863416.1**

(22) Date of filing: **13.04.2011**

(51) Int Cl.:
*H04B 7/26* (2006.01)          *H04W 52/24* (2009.01)
*H04L 5/00* (2006.01)          *H04W 52/14* (2009.01)
*H04W 52/26* (2009.01)        *H04W 72/04* (2009.01)
*H04W 72/12* (2009.01)        *H04W 52/34* (2009.01)

(86) International application number:
**PCT/CN2011/000647**

(87) International publication number:
**WO 2012/139251 (18.10.2012 Gazette 2012/42)**

(54) **METHOD AND BASE STATION FOR POWER ALLOCATION IN WIRELESS SYSTEM**

VERFAHREN UND BASISSTATION ZUR LEISTUNGSZUWEISUNG IN EINEM DRAHTLOSEN SYSTEM

PROCÉDÉ ET STATION DE BASE POUR ATTRIBUTION DE PUISSANCE DANS UN SYSTÈME SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.02.2014 Bulletin 2014/08**

(73) Proprietor: **Telefonaktiebolaget LM Ericsson (publ)**
**164 83 Stockholm (SE)**

(72) Inventor: **LIU, Honglai**
**Beijing 100102 (CN)**

(74) Representative: **Boco IP Oy Ab**
**Itämerenkatu 5**
**00180 Helsinki (FI)**

(56) References cited:
EP-A1- 1 727 296          CN-A- 101 421 938
CN-A- 101 841 359        US-A1- 2006 285 522
US-A1- 2007 042 784      US-A1- 2009 040 936

• TIEN-DZUNG NGUYEN ET AL: "A Proportional Fairness Algorithm with QoS Provision in Downlink OFDMA Systems", IEEE COMMUNICATIONS LETTERS, IEEE SERVICE CENTER, PISCATAWAY, NJ, US, vol. 10, no. 11, 1 November 2006 (2006-11-01), pages 760-762, XP011151550, ISSN: 1089-7798, DOI: 10.1109/LCOMM.2006.060750

• NOKIA SIEMENS NETWORKS: "E-UTRA operating band unwanted emission limits", 3GPP DRAFT; R4-070530, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Kobe, Japan; 20070501, 1 May 2007 (2007-05-01), XP050177021, [retrieved on 2007-05-01]

**Description**

Technical field

Embodiments herein relate generally to adaptive power allocation to user equipments in an Long Term Evolution (LTE) system and in particular to adaptive power allocation considering both channel quality and fairness when allocation power to user equipments.

Background

Third generation partnership project (3GPP) dealing with LTE is the latest standard in the mobile network technology. An object of LTE is to offer increased capacity and data rates for the users for mobile broadband. LTE meets the requirements of downlink data rates of at least 100 Mbit/s and uplink data rates of 50 Mbit/s. LTE also meets the requirement of a maximum round trip time of 30 ms.

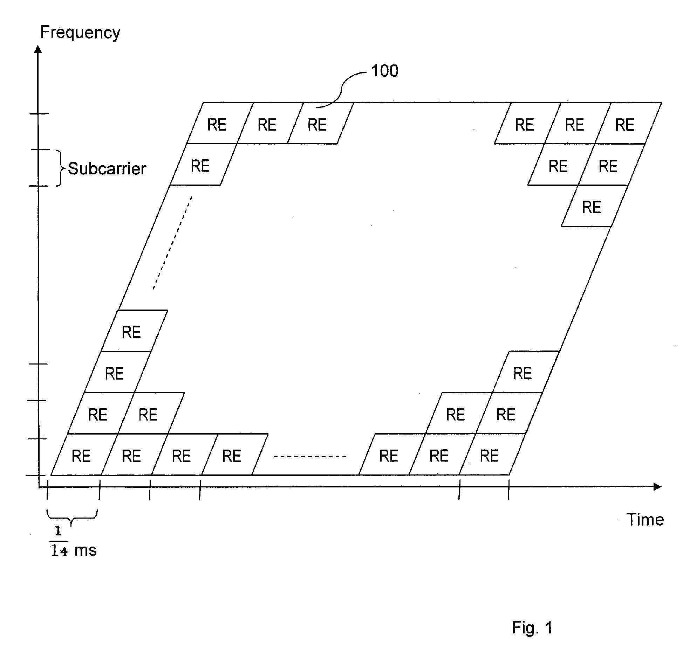

Contrary to former mobile communication systems, LTE supports Frequency Division Duplex (FDD) and Time Division Duplex, (TDD). As a consequence, radio resources for LTE can be represented by a two dimensional grid, see figure 1, illustrating normal Cyclic Prefix (CP) condition. In the grid of figure 1, a Resource Element 100 (RE) comprises one subcarrier as indicated on the frequency axis and a minimum time unit as indicated on the time axis. During the minimum time unit, twelve subcarriers constitute one Orthogonal Frequency Division Multiplexing (OFDM) symbol. For normal CP seven consecutive OFDM symbols, i.e. 0.5 ms, constitute a Resource Block forming one time slot. For extended CP, six consecutive OFDM symbols, i.e. 0.5 ms, constitute a Resource Block, forming one time slot. The minimum scheduling unit consists of two resource Blocks (RBs) within one subframe of 1 ms, i.e. 14 consecutive OFDM symbols for normal CP, and 12 consecutive OFDM symbols for extended CP.

An RE has a specific energy, normally referred to as Energy Per Resource Element (EPRE) also usually denoted $E_A$ and $E_B$. Some of the REs comprise reference signals, which also have an EPRE, denoted $E_{RS}$.

Downlink power allocation is disclosed in Technical Specification (TS) 3GPP TS 36.213 entitled: *"Group Radio Access Network; Evolved Universal Terrestrial Radio Access (E-UTRA); Physical layer procedures"* in which disclosed two parameters, which define a ratio $\dfrac{\rho_A}{\rho_B}$ among different types of REs to satisfy system requirements, wherein $\rho_A$ is the ratio of the Physical Downlink Shared Channel (PDSCH) EPRE which OFDM symbol comprises no cell-specific RS to cell-specific RS and $\rho_B$ is the ratio of PDSCH EPRE which OFDM symbol comprises cell-specific RS to cell-specific RS.

$\rho_A$ can be expressed as $\rho_A = \dfrac{E_A}{E_{RS}}$ and $\rho_B$ can be expressed as $\rho_B = \dfrac{E_B}{E_{RS}}$, where $E_A$ is PDSCH EPRE for OFDM symbols comprising no cell-specific RS, $E_B$ is PDSCH EPRE for OFDM symbols comprising cell-specific RS and $E_{RS}$ is the energy of cell-specific RS.

Further, according to 3GPP TS 36.213, $\rho_A$ is also equal to $^{\delta}$*power offset* + PA + $^{10log}10(2)$ when the user Equipment (UE) receives a PDSCH data transmission using pre-coding for transmit diversity with 4 cell-specific antenna ports; or equal to $^{\delta}$*power offset* + $P_A$ otherwise; where $^{\delta}$*power offset* is 0 for all PDSCH transmission schemes except multi-user MIMO and where $P_A$ is a UE specific parameter provided by higher layers and specified in 3GPP TS 36.331 entitled: *"Group Radio Access Network; Evolved Universal Terrestrial Radio Access (E-UTRA); Radio Resource Control (RRC); Protocol specification".*

In order to determine EPRE, it is common to configure $P_A$ and $P_B$ provided by higher layers and select a ratio for $\dfrac{\rho_A}{\rho_B}$.

According to 3GPP TS 36.331, $P_B$ is a common parameter, which is used to configure cells, whereas $P_A$ is a UE specific parameter, which is used to configure UE parameters. $P_B$ is an integer and selected from the domain [0, 3], while $P_A$ is selected from a special domain comprising eight values.

The value of $P_A$ influences the power of the REs, hence it is important to obtain the best value of $P_A$ to guarantee the efficiency of power usage and power limit.

For a certain OFDM symbol, the power of the REs for a UE is determined as disclosed above. However, the frequency resource allocated to a UE comprises several subcarriers since an RB comprises 12 subcarriers. The same power is allocated to the different subcarriers. This has some drawbacks. In certain circumstances, the channel qualities may vary quickly, e.g. if the UE is moving about in the cell. In such circumstances, the power allocation may not be able to follow the rapid changes in channel qualities. This will cause a waste of power and low efficiency with regards to power usage. Furthermore, it will decrease system performance.

Still further, in the power allocation, no consideration is usually taken to fairness. Fairness is dealt with in radio resource scheduling. A scheduling function which does not consider fairness, typically only considers channel quality or condition when scheduling radio resources. Such a scheduling function will allocate radio resources primarily to UEs having favorable channel quality or condition and as a result will starve other UEs having unfavorable channel quality or condition. When scheduling radio resources, the scheduling function may make use of a fairness factor in order to schedule radio resources based both on channel quality and to avoid starving UEs having unfavorable channel quality or condition. One example of a scheduler employing fairness in scheduling radio resources to UEs in the cell is disclosed in the Francesco D Calabrese et al: "Performance of Proportional Fair Frequency and Time Domain Scheduling in LTE Uplink" European Wireless 2009.

European Patent Application EP1727296A1 is related to the method and device for downlink resource allocation for packet transmission of users of radio communication system, and in particular, this patent application discloses a method for allocating the transmission power and spreading codes for packet transmission from a base station to the pre-selected users in a cell of a cellular communication system, preferably a wideband CDMA system supporting HSDPA.

US patent application US2007/0042784A1 is related to the reciprocity of radio channels in TDD, and longer-term correlation between average uplink and down link path losses in FDD wireless communication systems to enable distributed schedulers in an enhanced uplink system to allocate uplink transmission resources while preemptively managing inter-cell interference levels.

<u>Summary</u>

It is an object of the exemplifying embodiments to address at least some of the problems outlined above. In particular, it is an object of the exemplifying embodiments to provide a base station and a method therein for allocating power in downlink transmissions for a user equipment (UE) in a Long Term Evolution, (LTE) system, wherein consideration is taken to both channel quality and fairness in the power allocation.

According to an aspect a method for use in a base station for allocating power in downlink transmissions for a UE in an LTE system is provided. The method comprises receiving, from the UE, a report comprising a Reference Signal Received Quality, RSRQ, indicating a current channel quality of a downlink transmission with multiple subcarriers; retrieving, from a resource management scheduler of the base station, a fairness factor used for achieving a fairness in scheduling between UEs served by the base station. The method also comprises determining a combined factor based on the received RSRQ and the retrieved fairness factor, for resource blocks, RBs, related to the downlink transmissions, the RBs comprising subcarriers pertaining to resources to be allocated to the UE. Further, the method comprises determining a power for the resource blocks based on the determined combined factor; and allocating the determined power for the downlink transmission(s) for the UE.

According to another aspect, a base station in an LTE system adapted to allocate power in downlink transmissions for a UE is provided. The base station is adapted to receive, from the UE, a report comprising a Reference Signal Received Quality, RSRQ, indicating a current channel quality of a downlink transmission with multiple subcarriers. The base station is also adapted to retrieve, from a resource management scheduler of the base station, a fairness factor used for achieving fairness in scheduling between UEs served by the base station. Further, the base station is adapted to determine a combined factor based on the received RSRQ and the retrieved fairness factor for resource blocks, RBs, related to the downlink transmissions, said RBs comprising subcarriers pertaining to resources to be allocated to the UE. Still further, the base station is adapted to determine a power for the RBs based on the determined combined factor; and to allocate the determined power for the downlink transmission(s) towards the UE.

The base station and the method therein have several advantages. One advantage is that consideration is taken to power usage, channel quality and fairness when allocating power to downlink transmissions for the UE. This improves efficiency of power usage and it enhances the system throughput. A further advantage is that the method is dynamic, thereby enabling adaptive power allocation for downlink transmissions for UEs. Another advantage is that it is possible to control the influence of channel quality and the influence of fairness in the power allocation.

<u>Brief description of drawings</u>

Embodiments will now be described in more detail in relation to the accompanying drawings, in which:

Figure 1 is a schematic illustration of radio resources in an LTE system.

Figure 2 is a flowchart of an exemplifying example of a method in a base station for allocating power in downlink transmissions for a User Equipment.

Figure 3 illustrates a water filling algorithm according to prior art.

Figure 4 is a schematic block diagram of an exemplifying example of a base station adapted to allocate power in downlink transmissions for a User Equipment.

<u>Detailed description</u>

Briefly described, exemplifying embodiments of a base station and a method therein are provided for allocating power in downlink transmissions for a UE in an LTE system. The power allocation is performed in such a way that consideration is taken to both efficiency of power usage in the cell that the base station is serving and to a fairness factor used for scheduling radio resources to UEs in the cell being served by the base station.

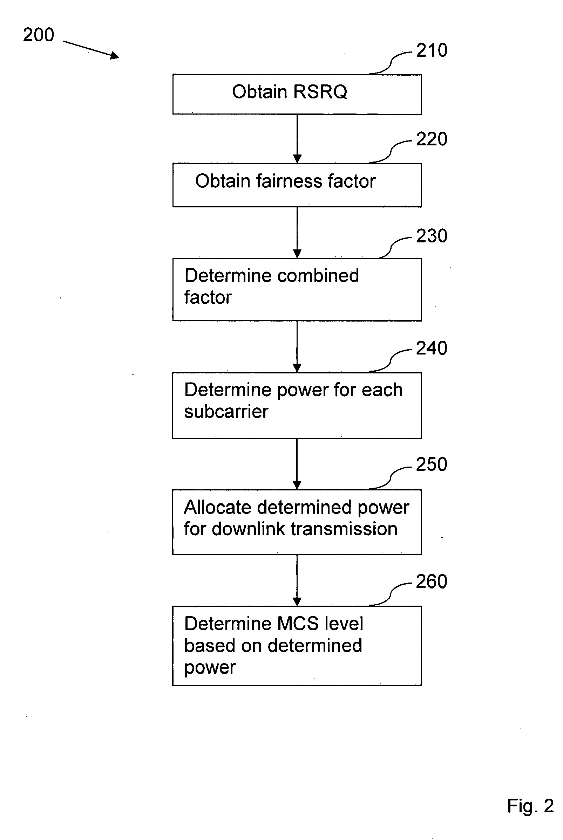

An exemplifying example of such a method in a base station for allocating power in downlink transmissions for a UE in an LTE system with reference to the flowchart in figure 2.In this example, the method comprises receiving 210 a report from the UE, the report comprising a Reference Signal Received Quality, RSRQ, indicating a current channel quality of a downlink transmission with multiple subcarriers. The method further comprises retrieving 220 a fairness factor from a resource management scheduler of the base station, the fairness factor being used for achieving fairness in scheduling between user equipments served by the base station. Still further, the method comprises determining 230 a combined factor based on the received RSRQ and the retrieved fairness factor, for resource blocks, RBs, related to the downlink transmissions, the RBs comprising subcarriers pertaining to resources to be allocated to the UE. The method also comprises determining 240 a power for the resource blocks based on the determined combined factor, and allocating 250 the determined power for the downlink transmission for the UE.

This has several advantages. One advantage is that consideration is taken to power usage, channel quality and fairness when allocating power to downlink transmissions for the UE. This improves efficiency of power usage and it enhances the system throughput. A further advantage is that the method is dynamic, thereby enabling adaptive power allocation.

In an example, the allocated power is communicated to the UE on a Physical Downlink Shared Channel, PDSCH.

According to an exemplifying example, determining 240 a power for the RBs comprises, determining a power for subcarriers of the RBs for determining a Modulation and Coding Scheme, MCS level to be used by the UE.

In this example, consideration is taken to individual subcarriers within an RB in order to improve efficiency of power usage and to enhance system throughput.

According to still an embodiment, determining 230 the combined factor comprises determining the combined factor by multiplying the received RSRQ and the retrieved fairness factor according to f=((RSRQ)$^a$)*((fairness factor)$^b$), where f is the combined factor; a and b are modify factors with a value from 0 to 1.

As described above, the combined factor f is used for determining 240 a power for the resource blocks. By determining the combined factor according to f=((RSRQ)$^a$)*((fairness factor)$^b$), it can be seen that the combined factor is dependent upon both the channel quality relating to power usage i.e. RSRQ and upon the fairness factor. Superscripts a and b are used to balance between optimisation of power usage and fairness. Since they both have an individual value from 0 to 1, it can be seen that the combined factor can be so to say biased towards optimisation of power usage or fairness.

According to yet an embodiment, allocating 250 the determined power for downlink transmission for the UE comprises using a predefined water filling function.

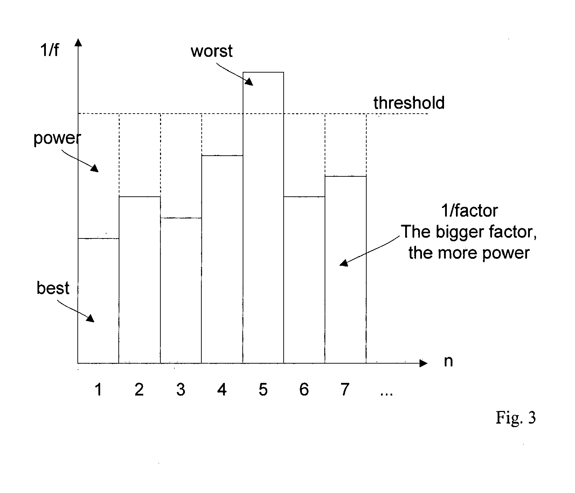

A water filling function is the most unfair function because the better the channel condition the more resources will be allocated to that channel. Figure 3 illustrates a water filling algorithm according to prior art. The x-axis stands for channel number n and y-axis stands for channel quality 1/f. The bottom rectangle enclosed by real line for every channel number n indicates the channel quality. The top rectangle enclosed by broken line for every channel number indicates the power that could be allocated. The higher the channel condition(s) the less power is allocated, even no power if it is worst enough to exceed the threshold (as shown in Fig.2 n=5); otherwise, it will allocated more power.

According to embodiments of the present invention, this unfairness of the water filing function is compensated for by the combined factor as described above.

Hence the combined factor is used as follows to reduce the unfairness of the water filling function. A target function is defined, the target function defining the maximum transmission rate, R. The defined target function is

$$\max\left(R\right) = \max\left(\sum_i \log_2\left(1 + f_i P_i\right)\right) = \max\left(\log_2 \prod_i \left(1 + f_i P_i\right)\right)$$
$$= \max\left(\log_2 \prod_i \left(1 + f_i a_i P\right)\right) \tag{1}$$

where $f_i$ is the combined factor for subcarrier or RB i, $P_i$ is the allocated power for subcarrier or RB i, P is the total power

and $a_i$ is the ratio between allocated power and total power for subcarrier or RB i. It shall be noted that $a_i$ here is not the same as the superscript in the combined factor. In equation (1) the value of $P_i$ is unknown. However, $P_i$ corresponds to $a_i*P$. P is the total power and it is determined by the capability of the hardware, hence it is a design power value.

The water filling function as function of the combined factor is then given by:

$$F\left(a_i, \lambda\right) = \sum_i \log_2 \left(1 + f_i a_i P\right) + \lambda \left(\sum_i a_i - 1\right) \qquad (2)$$

In order to solve the water filling function, the following is used:

$$\begin{cases} \dfrac{\partial F}{\partial a_i} = \dfrac{1}{\ln 2} * \dfrac{1}{1 + f_i a_i P} * f_i P + \lambda = 0 \\ \dfrac{\partial F}{\partial a_i} = \sum_i a_i - 1 = 0 \end{cases} \qquad (3)$$

This way $a_i$ is determined by solving equations (3) and from the $a_i$, the value of $P_i$ which meets the target function (1) can be determined by $P_i = a_i*P$.

According to still an embodiment, the method further comprises determining 260 a new MCS level based on the determined power for the subcarriers of the resource blocks.

Since the allocated power to the RBs or subcarriers may have changed since the reception 210 of the report from the UE, the report comprising the RSRQ, indicating a then current channel quality of a downlink transmission, the MCS level, according to an exemplary embodiment, may be determined with respect to the newly determined power for the subcarriers of the RBs to cope with recent channel quality.

In an example, the new determined MCS level is communicated to the UE on a Physical Downlink Control Channel, PDCCH.

It should be noted, that determination of MCS level may be performed in accordance with known MCS determination methods. Hence the embodiments herein are not restricted to any particular method of determining or calculating the MCS level.

An example of how to determine the MCS level is to determine a Signal to Noise Ratio, SINR, of the UE. The SINR will be influenced by e.g. transmission power, channel condition and so on. Also a Channel Quality Indicator, CQI, index is determined. This may be done e.g. by searching a SINR-BLER (Block Error Rate) table to determine a modulation order and maximum code rate. Further, an MCS index is determined. This can be performed e.g. by searching a modulation order - MCS index table usually predefined. The result may be more than one index. Further, a code rate for every MCS index is determined and then the code rate which is most proximal and less than a maximum code rate is determined, resulting in which MCS index is the most preferred.

Embodiments herein also disclose a base station in an LTE system adapted to allocate power in downlink transmissions for a UE. Some exemplifying embodiments will now be described with reference to figure 3. The exemplifying embodiments of the base station have the same objects and advantages as the method therein as described above. The exemplifying embodiments of the base station will therefore be briefly described in order to avoid unnecessary repetition.

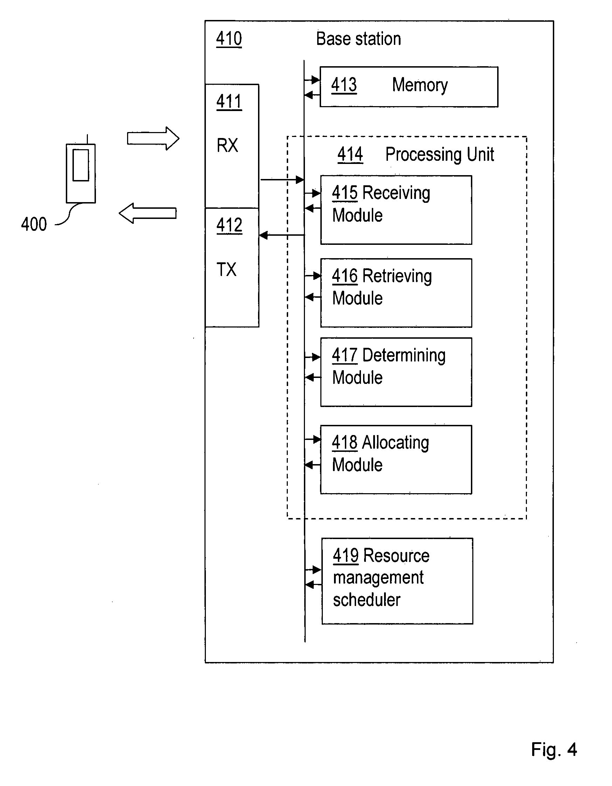

Figure 4 is a schematic block diagram of an exemplifying example of a base station in an LTE system adapted to allocate power in downlink transmissions for a UE.

A block diagram exemplifying a base station 410 is illustrated comprising a receiving, RX, 411 and transmitting, TX, 412 unit for supporting communication with the user equipment 400. RX and TX may be integrated into a same transceiver unit (not shown). The base station 410 further comprising a memory 413 and a processing unit 414.

The base station 410 is adapted to receive a report from the UE 400, the report comprising a Reference Signal Received Quality, RSRQ, indicating a current channel quality of a downlink transmission with multiple subcarriers. The base station is also adapted to retrieve a fairness factor from a resource management scheduler 419 of the base station, the fairness factor being used for achieving fairness in scheduling between user equipments served by the base station 410. Still further, the base station is adapted to determine a combined factor based on the received RSRQ and the retrieved fairness factor for resource blocks, RBs, related to the downlink transmissions. The RBs comprises subcarriers pertaining to resources to be allocated to the UE 400. The base station is also adapted to determine a power for the RBs based on the determined combined factor; and to allocate the determined power for the downlink transmission towards the UE 400.

According to an example, the base station is further adapted to determine a power for subcarriers of the resource blocks for determining a MCS level to be used by the UE.

According to still an embodiment, the base station is further adapted to determine the combined factor by multiplying the received RSRQ and the retrieved fairness factor according to $f=((RSRQ)^a)*((fairness factor)^b)$, where f is the combined factor; a and b are modify factors with a value from 0 to 1.

Further, according to an embodiment, the base station is further adapted to allocate the determined power for downlink transmission for the UE using a predefined water filling function.

According to still an embodiment, the base station is further adapted to determine a new MCS level based on the determined power for the subcarriers of the resource blocks.

As shown in figure 4, the processing unit 414 comprises a receiving module 415 for receiving the report from the UE 400 indicating a current channel quality, via the RX unit 411. The processing unit 414 is also illustrated comprising a retrieving module 416 which is capable of retrieving the fairness factor from the resource management scheduler 419 illustrated as being comprised in the base station. The processing unit 414 is further illustrated having a determining module 417 and an allocating module 418. It should be noted that the modules are merely exemplifying illustrations and the processing unit 414 may comprise more modules or other modules. Likewise, the base station 410 may comprise more units or other units than is being illustrated in the exemplifying figure 4.

It should be noted that figure 4 merely illustrates various functional units and modules in the base station in a logical sense. The functions in practice may be implemented using any suitable software and hardware means/circuits etc. Thus, the embodiments are generally not limited to the shown structures of the base station and the functional units and modules. Hence, the previously described exemplary embodiments may be realised in many ways. For example, one embodiment includes a computer-readable medium having instructions stored thereon that are executable by the processing unit for performing the method. The instructions executable by the computing system and stored on the computer-readable medium perform the method steps of the present invention as set forth in the claims.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the embodiments and defined by the pending claims.

**Claims**

1. A method (200) for use in a base station for allocating power in downlink transmissions for a user equipment, UE, in a Long Term Evolution, LTE, system, the method comprising:

   - receiving (210), from the UE, a report comprising a Reference Signal Received Quality, RSRQ, indicating a current channel quality of a downlink transmission with multiple subcarriers,
   - retrieving (220), from a resource management scheduler of the base station, a fairness factor used for achieving a fairness in scheduling between user equipments served by the base station ,
   - determining (230) a combined factor based on the received RSRQ and the retrieved fairness factor, for resource blocks, RBs, related to the downlink transmission, said RBs comprising subcarriers pertaining to resources to be allocated to the UE,
   - determining (240) a power for the resource blocks based on the determined combined factor, and
   - allocating (250) the determined power for the downlink transmission for the UE,
   - wherein determining (230) the combined factor comprises determining said combined factor by multiplying the received RSRQ and the retrieved fairness factor according to $f=((RSRQ)^a)*((fairness factor)^b)$, where f is the combined factor; a and b are modify factors with a value from 0 to 1.

2. A method (200) according to claim 1, further comprising determining (240) a power for the resource blocks comprises, determining a power for subcarriers of the resource blocks for determining a Modulation and Coding Scheme, MCS level to be used by the UE.

3. A method (200) according to claim 1 or claim 2, wherein allocating (250) the determined power for downlink transmission for the UE comprises using a predefined water filling function.

4. A method according to anyone of claims 1-3, wherein the method further comprises determining (260) a new MCS level based on the determined power for the subcarriers of the resource blocks.

**5.** A base station (410) in a Long Term Evolution, LTE, system adapted to allocate power in downlink transmissions for a user equipment, UE, (400), the base station (410) is adapted to:

- receive, from the UE (400), a report comprising a Reference Signal Received Quality, RSRQ, indicating a current channel quality of a downlink transmission with multiple subcarriers,
- retrieve, from a resource management scheduler (419) of the base station, a fairness factor used for achieving a fairness in scheduling between user equipments served by the base station (410),
- determine a combined factor based on the received RSRQ and the retrieved fairness factor for resource blocks, RBs, related to the downlink transmission, said RBs comprising subcarriers pertaining to resources to be allocated to the UE (400),
- determine a power for the RBs based on the determined combined factor, and
- allocate the determined power for the downlink transmission towards the UE (400),
- determine said combined factor by multiplying the received RSRQ and the retrieved fairness factor according to $f=((RSRQ)^a)*((fairness\ factor)^b)$, where f is the combined factor; a and b are modify factors with a value from 0 to 1.

**6.** A base station (410) according to claim 5, wherein the base station is further adapted to determine a power for subcarriers of the resource blocks for determining a Modulation and Coding Scheme, MCS level to be used by the UE.

**7.** A base station (410) according to claim 5 or 6, further adapted to allocate the determined power for downlink transmission for the UE using a predefined water filling function.

**8.** A base station (410) according to any of claims 5-7, further adapted to determine a new MCS level based on the determined power for the subcarriers of the resource blocks.

**Patentansprüche**

**1.** Verfahren (200) zur Verwendung in einer Basisstation für die Zuweisung von Leistung in Abwärtsstreckenübertragungen für eine Benutzerausrüstung, UE, in einem Long-Teim-Evolution-System, LTE-System, das Verfahren umfassend:

- Empfangen (210) eines Berichtes von der UE, der eine Referenzsignal-Empfangsqualität, RSRQ, die eine aktuelle Kanalqualität einer Abwärtsstreckenübertragung mit mehreren Zwischenträgern anzeigt, umfasst,
- Abrufen (220) eines Fairness-Faktors von einem Ressourcenmanagementplaner der Basisstation, der dafür verwendet wird, bei der Planung zwischen Benutzerausrüstungen, die von der Basisstation versorgt werden, Fairness zu erzielen,
- Bestimmen (230) eines kombinierten Faktors, basierend auf dem empfangenen RSRQ und dem abgerufenen Fairness-Faktor, für Ressourcenblöcke, RBs, die mit der Abwärtsstreckenübertragung im Zusammenhang stehen, wobei diese Ressourcenblöcke Zwischenträger umfassen, die zu den Ressourcen gehören, die der UE zuzuweisen sind,
- Bestimmen (240) einer Leistung für die Ressourcenblöcke, basierend auf dem bestimmten kombinierten Faktor, und
- Zuweisen (250) der bestimmten Leistung für Abwärtsstreckenübertragung für die UE,
- wobei das Bestimmen (230) des kombinierten Faktors das Bestimmen dieses kombinierten Faktors durch Multiplizieren des erhaltenen RSRQ und des abgerufenen Fairness-Faktors gemäß $f=((RSRQ)^a)*((Fairness\text{-}Faktor)^b)$ umfasst, wobei f der kombinierte Faktor ist; a und b Modifikationsfaktoren mit einem Wert von 0 bis 1 sind.

**2.** Verfahren (200) nach Anspruch 1, ferner umfassend das Bestimmen (240) einer Leistung für die Ressourcenblöcke, umfassend das Bestimmen einer Leistung für Zwischenträger der Ressourcenblöcke für das Bestimmen eines Modulations- und Codierschema-Niveaus, MCS-Niveaus, das von der UE zu verwenden ist.

**3.** Verfahren (200) nach Anspruch 1 oder Anspruch 2, wobei das Zuweisen (250) der bestimmten Leistung für die Abwärtsstreckenübertragung für die UE die Verwendung einer vordefinierten Wasserauffüllungsfunktion umfasst.

**4.** Verfahren nach einem der Ansprüche 1-3, wobei das Verfahren ferner das Bestimmen (260) eines neuen MCS-Niveaus umfasst, basierend auf der bestimmten Leistung für die Zwischenträger der Ressourcenblöcke.

**5.** Basisstation (410) in einem Long-Teim-Evolution-System, LTE-System, so angepasst, dass Leistung in Abwärtsstreckenübertragungen für eine Benutzerausrüstung, UE (400), zugewiesen wird, wobei die Basisstation (410) ist so angepasst, dass sie:

- einen Bericht von der UE (400) empfängt, der eine Referenzsignal-Empfangsqualität, RSRQ, die eine aktuelle Kanalqualität einer Abwärtsstreckenübertragung mit mehreren Zwischenträgern anzeigt, umfasst,
- einen Fairness-Faktor von einem Ressourcenmanagementplaner (419) der Basisstation abruft, der dafür verwendet wird, bei der Planung zwischen Benutzerausrüstungen, die von der Basisstation (410) versorgt werden, Fairness zu erzielen,
- einen kombinierten Faktor bestimmt, basierend auf dem empfangenen RSRQ und dem abgerufenen Fairness-Faktor für Ressourcenblöcke, RBs, die mit der Abwärtsstreckenübertragung im Zusammenhang stehen, wobei diese Ressourcenblöcke Zwischenträger umfassen, die zu den Ressourcen gehören, die der UE (400) zuzuweisen sind,
- eine Leistung für die RBs bestimmt, basierend auf dem bestimmten kombinierten Faktor, und
- die bestimmte Leistung für Abwärtsstreckenübertragung zur UE (400) zuweist,
- den kombinierten Faktor durch Multiplizieren des empfangenen RSRQ und des abgerufenen Fairness-Faktors gemäß $f=((RSRQ)^a)*((Fairness\text{-}Faktor)^b)$ bestimmt, wobei f der kombinierte Faktor ist; a und b Modifikationsfaktoren mit einem Wert von 0 bis 1 sind.

**6.** Basisstation (410) nach Anspruch 5, wobei die Basisstation weiter angepasst wird, um eine Leistung für Zwischenträger der Ressourcenblöcke zu bestimmen, um ein Modulations- und Codierschema-Niveau, MCS-Niveau, zu bestimmen, das von der UE zu verwenden ist.

**7.** Basisstation (410) nach Anspruch 5 oder 6, weiter angepasst, um die bestimmte Leistung für Abwärtsstreckenübertragung für die UE zuzuweisen, wobei eine vordefinierte Wasserauffüllungsfunktion verwendet wird.

**8.** Basisstation (410) nach einem der Ansprüche 5-7, ferner angepasst, um ein neues MCS-Niveau zu bestimmen, basierend auf der bestimmten Leistung für die Zwischenträger der Ressourcenblöcke.

**Revendications**

**1.** Procédé (200) pour utilisation dans une station de base pour allouer de la puissance dans des transmissions de liaison descendante pour un équipement d'utilisateur, UE, dans un système d'évolution à long terme, LTE, le procédé comprenant :

- la réception (210), depuis l'UE, d'un rapport comprenant une qualité de réception de signal de référence, RSRQ, indiquant la qualité de canal actuelle d'une transmission de liaison descendante avec des sous-porteuses multiples,
- l'extraction (220), à partir d'un planificateur de gestion de ressource de la station de base, d'un facteur d'équité utilisé pour obtenir une équité dans la planification entre les équipements d'utilisateur servis par la station de base,
- la détermination (230) d'un facteur combiné sur la base de la RSRQ reçue et du facteur d'équité extrait, pour des blocs de ressource, RB, liés à la transmission de liaison descendante, lesdits RB comprenant des sous-porteuses appartenant à des ressources devant être allouées à l'UE,
- la détermination (240) d'une puissance pour les blocs de ressource sur la base du facteur combiné déterminé, et
- l'allocation (250) de la puissance déterminée pour la transmission de liaison descendante pour l'UE,
- dans lequel la détermination (230) du facteur combiné comprend la détermination dudit facteur combiné par multiplication du RSRQ reçu et du facteur d'équité extrait selon $f = ((RSRQ)^a)*((facteur\ d'équité)^b)$, où f est le facteur combiné ; a et b sont des facteurs de modification ayant une valeur de 0 à 1.

**2.** Procédé (200) selon la revendication 1, comprenant en outre la détermination (240) d'une puissance pour les blocs de ressource qui comprend, la détermination d'une puissance pour des sous-porteuses des blocs de ressource pour déterminer un niveau de schéma de modulation et de codage, MCS, devant être utilisé par l'UE.

**3.** Procédé (200) selon la revendication 1 ou la revendication 2, dans lequel l'allocation (250) de la puissance déterminée pour la transmission de liaison descendante pour l'UE comprend l'utilisation d'une fonction de remplissage d'eau prédéfinie.

**4.** Procédé selon l'une quelconque des revendications 1 à 3, le procédé comprenant en outre la détermination (260) d'un nouveau niveau de MCS basé sur la puissance déterminée pour les sous-porteuses des blocs de ressource.

**5.** Station de base (410) dans un système d'évolution à long terme, LTE, adaptée pour allouer de la puissance dans des transmissions de liaison descendante pour un équipement d'utilisateur, UE (400), la station de base (410) étant adaptée pour :

- recevoir, depuis l'UE (400), un rapport comprenant une qualité de réception de signal de référence, RSRQ, indiquant la qualité de canal actuelle d'une transmission de liaison descendante avec des sous-porteuses multiples,
- extraire, à partir d'un planificateur de gestion de ressource (419) de la station de base, un facteur d'équité utilisé pour obtenir une équité dans la planification entre les équipements d'utilisateur servis par la station de base (410),
- déterminer un facteur combiné sur la base de la RSRQ reçue et du facteur d'équité extrait, pour des blocs de ressource, RB, liés à la transmission de liaison descendante, lesdits RB comprenant des sous-porteuses appartenant à des ressources devant être allouées à l'UE (400),
- déterminer une puissance pour les RB sur la base du facteur combiné déterminé, et
- allouer la puissance déterminée pour la transmission de liaison descendante vers l'UE (400),
- déterminer ledit facteur combiné par multiplication du RSRQ reçu et du facteur d'équité extrait selon $f = ((RSRQ)^a)*((facteur\ d'équité)^b)$, où f est le facteur combiné ; a et b sont des facteurs de modification ayant une valeur de 0 à 1.

**6.** Station de base (410) selon la revendication 5, la station de base étant en outre adaptée pour déterminer une puissance pour des sous-porteuses des blocs de ressource pour déterminer un niveau de schéma de modulation et de codage, MCS, devant être utilisé par l'UE.

**7.** Station de base (410) selon la revendication 5 ou 6, étant en outre adaptée pour allouer la puissance déterminée pour la transmission de liaison descendante pour l'UE en utilisant une fonction de remplissage d'eau prédéfinie.

**8.** Station de base (410) selon l'une quelconque des revendications 5 à 7, étant en outre adaptée pour déterminer un nouveau niveau MCS sur la base de la puissance déterminée pour les sous-porteuses des blocs de ressource.

Fig. 1

200

Fig. 2

```
                    ┌─────────────────────────┐ ← 210
                    │      Obtain RSRQ        │
                    └─────────────────────────┘
                                 │
                                 ▼
                    ┌─────────────────────────┐ ← 220
                    │   Obtain fairness factor │
                    └─────────────────────────┘
                                 │
                                 ▼
                    ┌─────────────────────────┐ ← 230
                    │   Determine combined     │
                    │   factor                 │
                    └─────────────────────────┘
                                 │
                                 ▼
                    ┌─────────────────────────┐ ← 240
                    │  Determine power for each│
                    │  subcarrier              │
                    └─────────────────────────┘
                                 │
                                 ▼
                    ┌─────────────────────────┐ ← 250
                    │  Allocate determined power│
                    │  for downlink transmission│
                    └─────────────────────────┘
                                 │
                                 ▼
                    ┌─────────────────────────┐ ← 260
                    │  Determine MCS level     │
                    │  based on determined     │
                    │  power                   │
                    └─────────────────────────┘
```

Fig. 3

Fig. 4

## REFERENCES CITED IN THE DESCRIPTION

**Patent documents cited in the description**

- EP 1727296 A1

- US 20070042784 A1

**Non-patent literature cited in the description**

- **FRANCESCO D CALABRESE et al.** Performance of Proportional Fair Frequency and Time Domain Scheduling in LTE Uplink. *European Wireless,* 2009